# EUROPEAN PATENT SPECIFICATION

(11) **EP 0 498 972 B1**
(45) Date of publication and mention of the grant of the patent: **25.01.1995**
(21) Application number: 91203129.1
(22) Date of filing: 29.11.1991
(51) Int. Cl.: A23B 7/06, A23L 3/01, A23B 7/01

(54) **Method for blanching or part-cooking vegetable material**
Blanchierverfahren oder teilweises Kochverfahren für pflanzliche Produkte
Procédé pour blanchir ou cuire partiellement des produits végétaux

(30) Priority: 18.01.1991 EP 91300396
(43) Date of publication of application: 19.08.1992
(73) Proprietor: UNILEVER N.V., 3013 AL Rotterdam (NL); UNILEVER PLC, London EC4P 4BQ (GB)
(72) Inventor: Bailey, John, Sharnbrook, Bedford, MK44 1LQ (GB); Dale, Christopher Paul, Sharnbrook, Bedford, MK44 1LQ (GB); Graber, Hans Jürgen, Sharnbrook, Bedford, MK44 1LQ (GB); Hall, Spencer William, Sharnbrook, Bedford, MK44 1LQ (GB); Richards, Jeffrey Bryn, Sharnbrook, Bedford, MK44 1LQ (GB); Silvestri, Carlo, I-81100 Caserta (IT)
(74) Representative: Kirsch, Susan Edith

(56) References cited:
- FR-A- 2 431 261
- US-A- 3 578 463
- US-A- 3 889 009
- US-A- 3 961 569
- US-A- 4 409 454

## Description

The present invention relates to a method for blanching or part-cooking vegetable material comprising heat treating it in the presence of water and thereafter quickly cooling it down.

The expressions "blanching" and "part-cooking" or "pre-cooking" have roughly the same meaning: "blanching" means heating to a sufficient extent to stop the enzymatic activity of vegetable material, while "part-cooking" means a further heating whereby at least some softening of the tissue is obtained.

Several types of blanching or part-cooking methods are known in the art such as transferring the vegetable material from a container with cold washing water to successive containers containing water of increasing temperatures and finally to a container with cold water for cooling it down again. The use of direct steam for heating water in these containers is well known. In some instances cold water sprays are used instead of immersion cooling to prevent excessive leaching of valuable nutrients. Despite these possibilities there is a continuing need for blanched or part-cooked vegetables, intended for frozen or chilled distribution, of improved quality. This improved quality refers to nutrition, appearance, taste and texture.

US-A-3578 463 is concerned with blanching of vegetables by microwave and heat treatment. The heat treatment can be carried out with steam. However, it is essential for this process that a final hot water blanch is employed in order to correct any non-uniformity of the microwave blanch. The rapid cooling is optional and if done then by emerging in cold water

It has unexpectedly been found that by suitably combining several processing variables this quality improvement can be achieved. Essential for achieving the aimed quality improvement is contacting the vegetable material with saturated steam while it is supported on a moving conveyor and while it is not submerged in a liquid and exposing said material at least during part of this treatment to microwave radiation. In a preferred embodiment for the quality improvement, the heat treated vegetable material is subsequently cooled down by contacting it with finely divided water (liquid or solid) having a temperature not exceeding 5°C and preferably having a temperature between 0°C and -10°C. The use of frozen, finely divided water results in a very quick cooling step whereby the overall quality is increased. To obtain water in a finely divided, solid form it is preferable to contact it with a cryogenic material before it is brought into contact with the vegetable material, whereby a very fast cooling rate can be achieved without undesirable dehydration.

For reducing the degradation of colours and nutrients it is preferred that the oxygen content of the atmosphere around the vegetables while contacting these with steam is reduced with respect to atmospheric air. In order to reduce the blanching or cooking time, pressurized steam may be used. In a preferred embodiment for limiting the taste deterioration as far as possible, the vegetables are supported on a trough shaped belt conveyor, capable of retaining at least a considerable part of any juices exuded from the vegetables. By doing so the vegetables are heated in a moist and flavoured environment. The optimal conditions of time, temperature, steam pressure and microwave power depend on the vegetable to be treated and should be determined empirically.

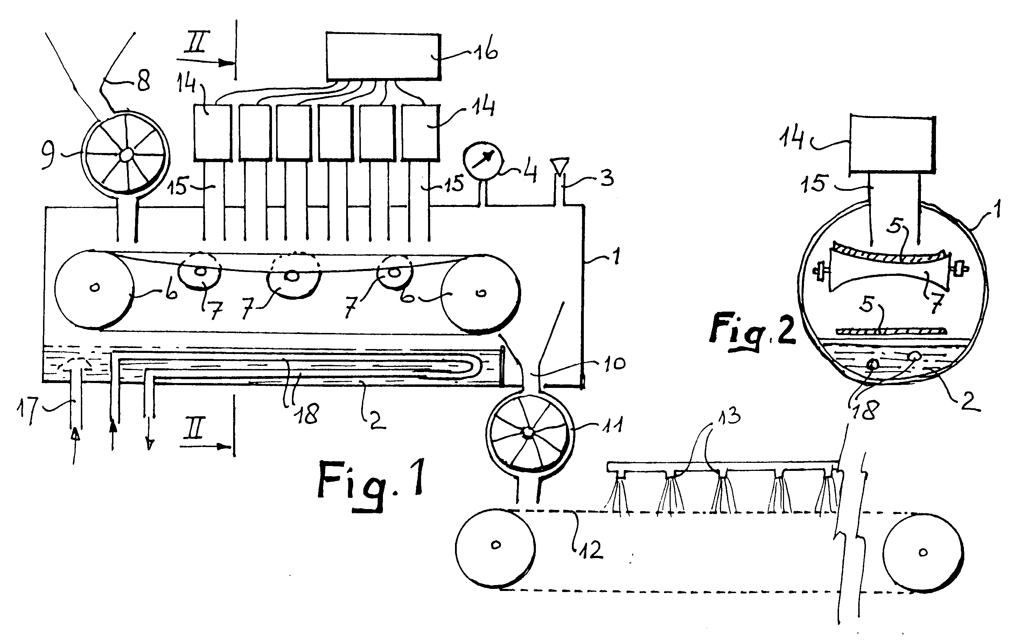

The invention will be further illustrated on hand of the following examples of some embodiments, reference being made to the drawing in which Figure 1 is a schematic longitudinal sectional view of a blanching equipment and Figure 2 is a cross sectional view along the line II-II in Figure 1.

The equipment schematically shown in Figures 1 and 2 comprises a cylindrical tube 1, forming a pressure chamber, having a water bath 2 for producing saturated steam and an outlet 3. Saturated steam can conveniently be generated by evaporating water from the water bath 2 by sufficiently heating this water. This heating may be effected by bubbling direct dry steam through the water using one or more steam injectors 17 or preferably by indirect steam heating using a heat exchanger 18. The water level is continuously maintained in the bath 2. The pressure in the tube 1 is continuously regulated and can be read on the pressure gauge 4.

Inside the tube a solid longitudinal conveyor belt 5 is mounted on reversing rollers 6, the upper run being supported on concave shaped (diabolo) supporting rollers 7, giving the belt a trough shape, suitable for retaining some fluid thereon. Vegetables may be fed onto the belt through a feeding conduit 8 comprising a star wheel 9. These vegetables are conveyed on the upper run of the conveyor from the receiving end underneath the feeding conduit 8 to the dispensing end.

A dispensing conduit 10 comprising a star wheel 11 is arranged underneath the dispensing end, opening onto a steel mesh conveyor 12 above which spray nozzles 13 are arranged for dispensing a finely distributed spray of water onto the product on the steel mesh conveyor.

The tube 1 is provided with a plurality of microwave emitters 14, which are connected to the tube 1 by suitably dimensioned tubes 15. The emitters are powered and controlled by a common power and control station 16. Each microwave emitter 14 can be adjusted to emit continuously or intermittently at levels between 0 and 100% of full microwave power.

### Example I:

Carrots of 1 to 1½ cm diameter and chopped into lengths of about 3 cm were fed onto conveyor 5. Wet steam of 106°C was supplied to tube 1 where a pressure of 1.25 atm. was maintained. The residence time of the carrots was 2 mins and during their travel on the conveyor belt they were six times exposed to microwave radiation, supplied by six separate microwave emitters 14, each having a capacity of 1.2 kW.
During the above described heat treatment some juice exuded from the carrots, which was retained on the belt 5 because of the trough shape thereof.

At the dispensing end the carrots fell into the funnel shaped receiving end of the dispensing conduit 10 and left the pressurized tube through star wheel valve 11 onto steel mesh belt 12.
This belt was driven at a speed of 1 m/min. Twelve bat wing shaped spray nozzles 13 were arranged at intervals of 25 cm over the belt for supplying flat, triangular sprays of finely divided water onto the carrots. The water supply was cooled to about +2°C. By doing so the carrots were cooled down to +5°C in 3 mins.
This speed of cooling may be increased by spraying finely distributed liquid air or other cryogenic material into the water sprays.

The pre-cooked carrots were tastier and of better structure than carrots of the same size pre-cooked with direct steam of atmospheric pressure or with hot water and thereafter cooled with running tap water of 9°C.

### Example II

Green beans being about 3 to 5 mm thick were fed onto the belt 5, while saturated steam was supplied to the tube 1 at atmospheric pressure. The residence time of the beans in the tube was 2½ mins, during which they were three times exposed to microwave radiation, using the first, second and third emitter 14 only.
Cooling was effected using water of 0°C, whereby the temperature of the beans was reduced from 90°C to 5°C in 1½ mins.
Beans of a better colour and taste and having a crispier structure than beans partially cooked in hot water at 98°C for 6 mins and thereafter cooled in running tap water of 9°C were obtained.

### Example III

Yellow paprika strips (roughly 100 x 5 x 3 mm) were fed onto the belt 5 while a water saturated atmosphere at 85°C was generated in the tube 1. The residence time of the product in the tube was 55 secs, during which they were six times exposed to microwave radiation in a sequence of decreasing power. Cooling was effected using water at 0°C for 40 secs.
The paprika strips had better texture and taste than those blanched in water at 90°C for 35 secs.

## Claims

1. A method for blanching or part-cooking vegetable material comprising heat treating it in the presence of water and thereafter quickly cooling it down, characterized in that the vegetable material is contacted with saturated steam while supported on a moving conveyor and not submerged in a liquid and at least during part of this treatment is exposed to microwave radiation.

2. A method according to claim 1, characterized in that the vegetable material is cooled down by contacting it with finely divided water having a temperature not exceeding 5°C and preferably having a temperature between 0°C and -10°C.

3. A method according to claim 2, characterized in that the water is contacted with a cryogenic material before it is contacted with the vegetable material.

4. A method according to claims 1-3, characterized in that the vegetable material is contacted with steam in an atmosphere having a lower oxygen content than atmospheric air.

5. A method according to claims 1-4, characterized in that the vegetable material is contacted with pressurized steam.

6. A method according to claims 1-5, characterized in that the vegetable material is supported on a trough shaped belt conveyor capable of retaining at least a considerable part of any juices exuded from the vegetable material.

## Patentansprüche

1. Verfahren zum Blanchieren oder teilweisen Kochen von Gemüsematerial mit einer Hitzebehandlung in Anwesenheit von Wasser und nachfolgender rascher Abkühlung, dadurch gekennzeichnet, daß das Gemüsematerial mit gesättigtem Dampf in Kontakt gebracht wird, während es auf einem sich bewegenden Förderer liegt und während es nicht in einer Flüssigkeit untergetaucht ist, und daß das Material zumindest während eines Teils dieser Behandlung einer Mikrowellenstrahlung ausgesetzt wird.

2. Verfahren nach Anspruch 1, dadurch gekennzeichnet, daß das Gemüsematerial abgekühlt wird, indem es mit feinteiligem Wasser mit einer Temperatur von nicht mehr als 5°C, und vorzugsweise mit einer Temperatur zwischen 0°C und -10°C, in Kontakt gebracht wird.

3. Verfahren nach Anspruch 2, dadurch gekennzeichnet, daß das Wasser mit einem kryogenen Material in Kontakt gebracht wird, bevor es mit dem Gemüsematerial in Kontakt gebracht wird.

4. Verfahren nach den Ansprüchen 1-3, dadurch gekennzeichnet, daß das Gemüsematerial mit Dampf in einer Atmosphäre mit einem niedrigeren Sauerstoffgehalt als atmosphärische Luft in Kontakt gebracht wird.

5. Verfahren nach den Ansprüchen 1-4, dadurch gekennzeichnet, daß das Gemüsematerial mit unter Druck befindlichem Dampf in Kontakt gebracht wird.

6. Verfahren nach den Ansprüchen 1-5, dadurch gekennzeichnet, daß das Gemüsematerial auf einem trogförmigen Bandförderer gelagert wird, welcher zumindest einen beträchtlichen Teil jedweder aus dem Gemüsen ausgetretenen Säfte zurückhalten kann.

## Revendications

1. Procédé pour blanchir ou cuire partiellement des produits végétaux, comportant le traitement à chaud de ceux-ci en présence d'eau et ensuite le refroidissement rapide de ceux-ci caractérisé en ce que les produits végétaux sont au contact de vapeur saturée pendant que ceux-ci sont supportés par un transporteur mobile et non immergés dans un liquide et sont exposés à un rayonnement de miroondes au moins pendant une partie de ce traitement.

2. Procédé selon la revendication 1, caractérisé en ce que les produits végétaux sont refroidis par contact avec une eau finement divisée ayant une température n'excédant pas 5 °C et de préférence ayant une température comprise entre 0°C et -10°C.

3. Procédé selon la revendication 2, caractérisé en ce que l'eau est mise en contact avec un matériau cryogénique avant d'être en contact avec les produits végétaux.

4. Procédé selon l'une quelconque des revendications 1 à 3, caractérisé en ce que les produits végétaux sont au contact d'une vapeur située dans une atmosphère ayant une teneur en oxygène plus faible que l'air atmosphérique.

5. Procédé selon l'une quelconque des revendications 1 a 4, caractérisé en ce que les produits végétaux sont au contact d'une vapeur sous pression.

6. Procédé selon l'une quelconque des revendications 1 à 5, caractérisé en ce que les produits végétaux sont supportés par un transporteur à bande formée en auge capable de retenir au moins une partie considérable des jus exsudés des produits végétaux.
